Europäisches Patentamt

European Patent Office

Office européen des brevets

(19)

(11) **EP 1 380 370 A2**

## (12) EUROPEAN PATENT APPLICATION

(43) Date of publication:
**14.01.2004 Bulletin 2004/03**

(51) Int Cl.7: **B22D 27/02**, C22B 9/02,
H02K 44/08

(21) Application number: **03254311.8**

(22) Date of filing: **08.07.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **08.07.2002 JP 2002198474**

(71) Applicant: **NAGOYA UNIVERSITY**
**Chikusa-ku Nagoya City Aichi Prefecture (JP)**

(72) Inventors:
• **Iwai, Kazuhiko**
**Nagoya City, Aichi Pref. (JP)**
• **Asai, Shigeo**
**Nagoya City, Aichi Pref. (JP)**
• **Moreau, Rene**
**38402 Saint Martin d'Heres (FR)**

(74) Representative: **Paget, Hugh Charles Edward et al**
**MEWBURN ELLIS**
**York House**
**23 Kingsway**
**London WC2B 6HP (GB)**

(54) **Method for propagating vibration into a conductive fluid and method for solidifying a melted metal using the same propagating method of vibration**

(57)    A given magnetic field and a given wave are applied to a conductive fluid so as to satisfy the relations of:

$$\lambda_* > \delta \qquad (2)$$

on condition that a length of said conductive fluid is set to $1_\perp$ (m), and the equations of $\delta=(2/\sigma\mu\omega)^{1/2}$ and $\lambda_*=2\pi B/\omega(\rho\mu)^{1/2}$ are defined ($\sigma$: the electric conductivity (S/m) of said conductive fluid, $\rho$: the density (kg/m$^3$) of said conductive fluid, $\mu$: the permeability of said conductive fluid, B: the strength of said magnetic field (T), $\omega$: the angular frequency of said wave), thereby to generate and propagate a given vibration into said conductive fluid.

*FIG. 1*

EP 1 380 370 A2

**Description**

BACKGROUND OF THE INVENTION

Field of the Invention

This invention relates to a method for propagating vibration into a conductive fluid and a method for solidifying a melted metal using the same propagating method of vibration.

Description of the prior art

The control of solidification structure and the refinement can be performed effectively by applying vibration into the melted liquid metal to be solidified. For example, it is well known that solidification process is started by applying mechanical impact to a supercooled liquid metal. It is also well known that fine structure can be created by applying vibration to a melted liquid metal during solidification and degasifying process is promoted by applying compress ional wave to a melted liquid metal.

On laboratory scale, by applying a given mechanical vibration to the whole of a vessel where a liquid metal is charged, a given vibration can be easily applied to the liquid metal. On large industrial scale, however, it is difficult to vibrate the whole of a huge vessel mechanically. Therefore, as of now, such an attempt is made as to position a magnetostrictive oscillator or an electrostrictive oscillator in a liquid metal,-and thus, apply a given vibration to the liquid metal. Also, such an attempt is made as to introduce a compressional wave which is generated by a speaker into a liquid metal and thus, apply a given vibration to the liquid metal.

However, if such a magnetostrictive oscillator or an electrostrictive oscillator is employed, it may be melted or destroyed in the liquid metal, to contaminate the liquid metal. Also, the amplitude of the vibration to be applied is restricted due to the limitation of the output power level of the oscillator. Moreover, if such a compressional wave is employed, it may be reflected almost entirely at the boundary between the liquid metal and the environmental atmosphere, not to be applied to the liquid metal because the acoustic resistance between the liquid metal and the environmental atmosphere is increased. As a result, a method for propagating vibration into a liquid metal is not be developed particularly on the large industrial scale, at present.

SUMMARY OF THE INVENTION

It is an object of the present invention to provide a new method for propagating vibration into a liquid metal, which is usable on a large industrial scale.

In order to achieve the above object, this invention relates to a method for propagating vibration into a conductive fluid, comprising the steps of:

preparing a given conductive-fluid, and

applying a given magnetic field and a given wave to the conductive fluid so as to satisfy the relations of:

$$1_\perp > \delta \tag{1}$$

$$\lambda_{//} > \delta \tag{2}$$

on condition that the length of the conductive fluid is set to $1_\perp$ (m), and the equations of $\delta = (2/\sigma\mu\omega)^{1/2}$ and $\lambda_{//} = 2\pi B/\omega(\rho\mu)^{1/2}$ are defined ($\sigma$: the electric conductivity (S/m) of the conductive fluid, $\rho$: the density (kg/m$^3$) of the conductive fluid, $\mu$: the permeability of the conductive fluid, B: the strength of the magnetic field (T), $\omega$: the angular frequency of the wave), thereby to generate and propagate a given vibration into the conductive fluid.

The inventors had been intensely studied to achieve the above object. Then, they had conceived that by applying an electromagnetic force to a melted conductive fluid such as a liquid metal, instead of conventionally utilizing a mechanical vibration, an oscillator or a speaker, a given vibration is generated and propagated in the conductive fluid.

From the past, it is well known that only a compressional wave can be propagated into a conductive fluid such as a liquid metal. On the other hand, the vibration originated from the electromagnetic force is a transverse wave. Therefore, in the present invention, the transverse wave is generated and propagated in the conductive fluid. As mentioned above, since it is known that only a compressional wave can be propagated into the conductive fluid, the inventors had intensely studied to generate and propagate a transverse wave originated from the electromagnetic force.

If a magnetic field of relatively large strength is applied to a conductive fluid, a given disturbance of magnetic field is generated due to the magnetic field to be applied, and then, propagated in convection. That is, if the conductive fluid is moved under the magnetic field, an inductive current is generated and thus, the distribution of the magnetic field to be applied is changed. In this case, the conductive fluid is moved as the magnetic flux lines are attached to the fluid particles.

Then, the inventors found out that by applying the magnetic field and a given wave to the conductive fluid under the above-mentioned condition so that a given requirement is satisfied, a transverse wave can be generated and propagated into the conductive fluid. As a result, a given vibration can be generated and propagated in the conductive fluid by the electromagnetic force. This invention is realized on the vast researches and developments as mentioned above.

According to the propagating method of vibration, a given vibration is generated in a conductive fluid by a given electromagnetic force originated from a magnetic field and a wave. Therefore, without a large-scale apparatus, the vibration can be easily generated in the conductive fluid. In this point of view, the propagating method of the present invention can be preferably employed on a large industrial scale.

In a preferred embodiment of the present invention, the magnetic field and the wave are applied to the conductive fluid so that the relation (3) of $1_{\perp} > \lambda_w$ is satisfied. In this case, the intended wave can be propagated easily in the conductive fluid.

For example, the propagating method of the present invention can be preferably utilized for solidifying a melted liquid metal. In this case, a given magnetic field and a given wave are applied to the liquid metal during the solidification process so as to satisfy the above-requirement according to the present invention. In this case, the size of the solidification structure can be controlled unrestrainedly, and thus, the solidification structure can be easily fined.

BRIEF DESCRIPTION OF THE DRAWINGS

For better understanding of the present invention, reference is made to the attached drawings, wherein

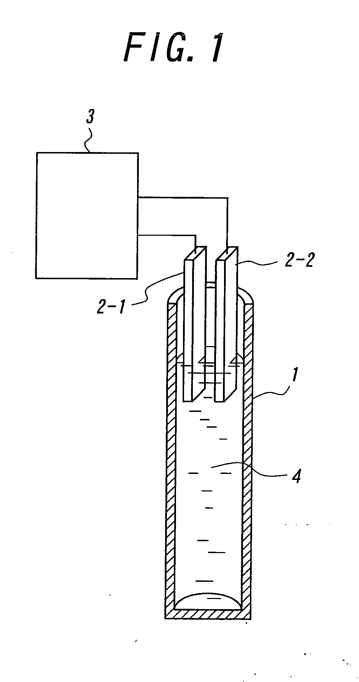

Fig. 1 is a schematic view showing an apparatus which is employed for solidifying a SnPb alloy according to the propagating method of vibration of the present invention.

DESCRIPTION OF THE PREFERRED EMBODIMENTS

This invention will be described in detail with reference to the accompanying drawings. in the present invention, it is required that a given magnetic field and a given wave are applied to a conductive fluid so that the above-mentioned relations (1) and (2) are satisfied. Only if the relations (1) and (2) are satisfied, the kind of wave and the frequency of wave are not restricted. In a real process such as the solidification of a liquid metal, however, since the electric conductivity of the liquid metal is within a range of $10^5$-$10^7$S/m and the density of the liquid metal is within a range of $10^3$-$10^4$kg/m$^3$, the relations (1) and (2) are satisfied by applying a magnetic field having a strength within a range of several Tesla through several ten Tesla and applying a wave having a frequency within a range of several hundred Hz through several thousand Hz.

In this case, a given disturbance of magnetic field is generated due to the magnetic field to be applied and propagated in convention in the conductive fluid. That is, the distribution of magnetic field is determined by the convection. Therefore, a given transverse wave is generated and propagated in the conductive fluid, originated from the magnetic force of the magnetic field and the wave, as mentioned above. As a result, a given vibration can be generated and propagated in the conductive fluid, originated from the transverse wave.

Such a magnetic field can be generated from a super conductive magnet. Also, such a wave can be generated from a given external AC power supply. That is, an AC electric field from the external AC power supply can be utilized as the wave to be used in the present invention. In this way, the magnetic field and the wave to be utilized in the present invention and satisfying the relations (1) and (2) can be easily obtained from the super conductive magnet and the external AC power supply, respectively.

In the present invention, as mentioned above, it is desired that the magnetic field and the wave are applied to the conductive fluid so as to satisfy the above-mentioned relation (3). If the strength of magnetic field from the super conductive magnet and the frequency of wave from the AC power supply are controlled appropriately, the above-mentioned condition can be satisfied.

It is estimated that the transverse wave propagating in the conductive fluid is an Alfven wave when the relations (1)-(3) are satisfied. The Alfven wave is being intensely researched in astronomical physics and plasma engineering, but not almost done in industrial field. Therefore, the Alfven wave is not almost utilized in the industrial field. In view of the industrial use of the Alfven wave, too, the present invention is quite important.

The propagating method of vibration of the present invention can be employed for various industrial fields. Particularly, if the method is employed for solidifying a melted liquid metal, the solidification structure can be controlled freely, and then, fined. In addition, the method may be employed for degasification, promotion of refining reaction and control of solid-liquid boundary face configuration.

Example:

Next, the present invention will be described concretely on examples, where the propagating method of vibration of the present invention is applied for solidifying a melted metal.

(Example)

In this example, such an apparatus as shown in Fig. 1 was employed, and an alloy having a composition of Sn-10mol%Pb (hereinafter, called as a "SnPb alloy") was melted and then, solidified. In the apparatus shown in Fig. 1, a cylindrical vessel 1 (internal diameter: 30mm, height: 150mm) made of glass is employed, and electrodes 2-1 and 2-2 (each width: 10mm, each thickness: 2mm) made of Cu are disposed in the vessel 1 so as to be opposite to one another. Also, an external AC power supply 3 is connected to the ends of the electrodes 2-1 and 2-2. The vessel 1 including the electrodes 2-1 and 2-2 is placed in a super conductive magnet (not shown).

A SnPb alloy 4 melted was charged in a depth of 120mm in the vessel 1, and then, the electrodes 2-1 and 2-2 were immersed in the melted SnPb alloy 4 by a length of 20mm, respectively. Then, a magnetic field of a strength of 8T was applied from the super conductive magnet (not shown) and an AC electric field of a frequency of 2000Hz and an amplitude of 75A was applied from the external AC power supply 3 to the SnPb alloy 4. Since the electric conductivity of the SnPb alloy 4 is $10^6$-$10^7$S/m and the density $\rho$ of the SnPb alloy 4 is about $10^4$kg/m$^3$, in this example, the above-mentioned relations (1)-(3) are satisfied by the magnetic field and the AC electric field. Under the condition, the SnPb alloy 4 was solidified at a cooling rate of 0.1K/sec.

When the solidification structure of the SnPb alloy solidified was observed, the size of the solidification structure was about 1mm or below at both of the upper side and the lower side of the vessel 1.

When the pressure of a wave propagating in the melted SnPn alloy 4 was measured by a sensor provided at the bottom portion of the vessel 1, it was turned out to be almost proportion to the current value of the AC electric field applied from the external AC power supply 3. Therefore, during the above Solidification process, it was estimated that a given Alfven wave was generated and propagated in the melted SnPb alloy 4.

(Comparative Example)

Except that the magnetic field and the AC electric field were not applied and thus, a given wave which is estimated as the Alfven wave was not propagated, the melted SnPb alloy 4 was solidified in the same manner as Example. When the solidification structure of the SnPb alloy solidified was observed, the size of the solidification structure was roughed at both of the upper side and the lower side of the vessel 1. Particularly, at the lower side of the vessel 1, the size of the solidification structure was enlarged up to about several mm.

Although the present invention was described in detail with reference to the above examples, this invention is not limited to the above disclosure and every kind of variation and modification may be made without departing from the scope of the present invention.

As mentioned above, only by applying a given magnetic field and a given electric field to a conductive fluid under a given condition, according to the present invention, a given vibration can be generated and propagated in a conductive fluid without a large scaled and complicated apparatus. Therefore, the propagating method of vibration of the present invention may be employed for various industrial fields, and for example, preferably as a solidification structure controlling method for a liquid metal melted.

**Claims**

1. A method for propagating vibration into a conductive fluid, comprising the steps of:

   preparing a given conductive fluid, and
   applying a given magnetic field and a given wave to said conductive fluid so as to satisfy the relations of:

$$1_{\perp} > \delta \qquad (1)$$

$$\lambda_{"} > \delta \qquad (2)$$

   on condition that a length of said conductive fluid is set to $1_{\perp}$ (m), and the equations of $\delta = 2/\sigma\mu\omega)^{1/2}$ and $\lambda_{"} = 2\pi B/\omega(\rho\mu)^{1/2}$ are defined ($\sigma$: the electric conductivity (S/m) of said conductive fluid, $\rho$: the density (kg/m$^3$) of said conductive fluid, $\mu$: the permeability of said conductive fluid, B: the strength of said magnetic field (T), $\omega$: the angular frequency of said wave), thereby to generate and propagate a given vibration into said conductive fluid.

2. The propagating method as defined in claim 1, wherein said magnetic field and said wave are applied to said conductive fluid so as to satisfy the relation of:

$$1_{\perp} > \lambda_{"} \qquad (3)$$

3. The propagating method as defined in claim 1 or 2, wherein said wave to be applied to said conductive fluid includes an AC electric field from an external AC power supply.

4. The propagating method as defined in any one of claims 1-3, wherein a given disturbance of magnetic field is generated due to said magnetic field to be applied and propagated in convection in said conductive fluid.

5. The propagating method as defined in any one of claims 1-4, wherein an Alfven wave is generated and propagated in said conductive fluid.

6. A method for solidifying a melted metal, comprising the steps of:

   preparing a melted metal, and
   applying a given magnetic field and a given wave to said melted metal so as to satisfy the

relations of:

$$1_\perp > \delta \qquad (1)$$

$$\lambda_{"} > \delta \qquad (2)$$

on condition that a length of said melted metal is set to $1_\perp$ (m), and the equations of $\delta=(2/\sigma\mu\omega)^{1/2}$ and $\lambda_{"}=2\pi B/\omega(\rho\mu)^{1/2}$ are defined ($\sigma$: the electric conductivity (S/m) of said melted metal, $\rho$: the density (kg/$m^3$) of said melted metal, $\mu$: the permeability of said melted metal, B: the strength of said magnetic field (T), $\omega$: the angular frequency of said wave), thereby to generate and propagate a given vibration into said melted metal.

7. The solidifying method as defined in claim 6, wherein said magnetic field and said wave are applied to said melted metal so as to satisfy the relation of:

$$1_\perp > \lambda_{"} \qquad (3)$$

8. The solidifying method as defined in claim 6 or 7, wherein said wave to be applied to said melted metal includes an AC electric field from an external AC power supply.

9. The solidifying method as defined in any one of claims 6-8, wherein a given disturbance of magnetic field is generated due to said magnetic field to be applied and propagated in convection in said melted metal.

10. The solidifying method as defined in any one of claims 6-9, wherein an Alfven wave is generated and propagated in said melted metal.

# FIG. 1